# EUROPEAN PATENT SPECIFICATION

(11) **EP 3 569 878 B1**
(45) Date of publication and mention of the grant of the patent: **23.12.2020**
(21) Application number: 19173856.6
(22) Date of filing: 10.05.2019
(51) Int. Cl.: F16B 25/00, F16B 35/06, F16B 25/10

(54) **FLAT-HEADED SCREW**
SENKKOPFSCHRAUBE
VIS À TÊTE FRAISÉE

(30) Priority: 14.05.2018 BE 201805312
(43) Date of publication of application: 20.11.2019
(73) Proprietor: PGB-International, 9090 Melle (BE)
(72) Inventor: PENNOIT, Luc Fernand Emile, 9050 GENTBRUGGE (BE)
(74) Representative: Chielens, Kristof

(56) References cited:
- EP-A1- 2 018 485
- EP-A1- 2 372 177
- EP-A1- 2 522 865
- EP-A1- 3 006 748
- WO-A1-2018/074972
- US-A- 5 772 376

## Description

The present invention relates to a flat-headed screw having a tip, a cylindrical shaft with a longitudinal axis around which at least one screw thread extends in a helical manner and a screw head which comprises an end face which is arranged at right angles to the longitudinal axis and a conical part which is directed towards the tip, wherein the conical part is provided with a number of curved cutting ribs, which are distributed in a peripheral direction and project radially outwards, and the conical part comprises a top conical section which adjoins the end face and a bottom conical section which adjoins the shaft, wherein said cutting ribs extend from the end face in the direction of the tip and wherein the end point of the cutting rib is situated in the bottom section.

Screws are available in a large variety of shapes and sizes. The shape of the head and the screw thread (the pitch) determine the application for which they are suited. The present invention relates to a flat-headed screw or a so-called countersunk cap screw for use with all types of wood, board material, such as e.g. chipboard and fibreboard, and also for metal-on-wood connections and as a finish in for example door fittings.

A flat-headed screw has a screw head with a tapering portion so that it can be countersunk in a satisfactory manner in relatively soft types of wood. In order for such a screw to also be countersunk in relatively hard materials in a satisfactory manner, it is known to provide the conical part of the screw head with internal cutting ribs (milling ribs). The aim of the internal cutting ribs is to enable the head of the screw to be countersunk into wood more readily, and not to form an obstruction for use in cut-out boreholes in metal objects.

The shape and positioning of these cutting ribs differs from screw to screw. Thus, European patent publication EP 2 018 485 describes a countersunk cap screw with a cylindrical shaft and a conical countersunk head which is provided with at least two milling or cutting edges on the countersunk portion.

European patent publication EP 2 522 865 also describes a screw with a countersunk head, a tip and an axle with a screw thread, wherein the conical part of the screw head comprises several radially outwardly extending cutting ribs which, seen in the radial direction towards the ribs directed in the viewing direction, run in a curved manner from the axle in a direction towards the head end, wherein the cutting ribs comprise radial bearing surfaces which are situated in a plane of a cone and form an arcuate cutting edge on an edge side in a screwing-in direction.

US 5,772,376 describes a countersunk flat-headed screw having an even number of shortened and non-shortened cutting ribs which are alternately provided on the conical part. The non-shortened ribs end in the transition between screw shaft and conical bottom side. The shortened ribs have a length of approximately 2/3 of the length of the neighbouring non-shortened rib.

EP 3 006 748 A1 describes a flat-headed screw having a number of cutting ribs which extend from the end face in the direction of the tip, with the end point of the cutting rib being situated in the bottom section of the conical part. According to EP 3 006 748, the cutting ribs denoted by reference numeral 12 serve as blocking ribs.

The above-described screws have the drawback that they, due to the cutting ribs, are difficult to screw out of a material, once they have been screwed into the latter. In addition, they do not produce a nice finish when used in metal, having a predrilled countersunk screw opening, since the head will not be positioned well and evenly countersunk with respect to the surrounding metal surface.

It is therefore an object of the present invention to provide a universally applicable countersunk flat-headed screw, which is employable in wood, composite materials, and the like, where the screw has to be countersunk well, as well as in metal-on-wood connections, where the screw is arranged in a (screw) opening which is provided in the metal and where the screw cannot be countersunk well by itself, but has to be able to be introduced well into the screw opening and has to adjoin the surrounding metal well. In addition, it has to be possible to readily unscrew the screw according to the invention subsequently and this without the end face thereof breaking off due to the blocking action of the cutting ribs provided.

The object of the invention is achieved by providing a flat-headed screw having a tip, a cylindrical shaft with a longitudinal axis around which at least one screw thread extends in a helical manner and a screw head which comprises an end face which is arranged at right angles to the longitudinal axis and a conical part which is directed towards the tip, wherein the conical part is provided with a number of curved cutting ribs, which are distributed in a peripheral direction and project radially outwards, wherein the conical part comprises a top conical section which adjoins the end face and a bottom conical section which adjoins the shaft, wherein said cutting ribs extend from the end face in the direction of the tip and wherein the end point of the cutting rib is situated in the bottom section, wherein the top section comprises a number of successive identical segments along its periphery which are separated from each other by the cutting ribs, wherein each segment comprises at least a first and a second part-segment, wherein the cutting rib forms part of the first part-segment, in that the end face is circular and in that the projection of the first part-segment on the end face coincides with a part of the contour line of the end face and in that the projection of the second part-segment on the end face has an elliptical shape, the starting point of which is situated at a distance from the contour line and the end point is situated on the contour line.

The construction of the conical part in combination with the positioning of the cutting ribs will ensure that the screw will be countersunk into wood quickly and completely and, in addition, has no detrimental effect in metal-on-wood applications. In order to be able to screw in the screw, the end face of the screw is provided with a central recess for screw means. This central recess is preferably designed as a Torx profile. However, other configurations may also be used, such as for example an inner hexagon. Due to the fact that the projection of the first part-segment coincides with a part of the contour line of the end face, the first part-segment is of a flat design. As a result thereof, the screw according to the invention will adjoin a countersunk opening cut-out in metal perfectly in a metal-on-wood application. However, the second part-segment is arranged obliquely, as a result of which a screwed-in screw can readily be screwed out subsequently.

The various cutting ribs project radially outwards over a specific height, the height is at its maximum at the location of the end face and will slowly decrease over the top section in order to finish at 0 in the bottom section at the location of its end point. The cutting ribs will at most end up level with the end face, but will never protrude beyond the end face.

In a preferred embodiment of the flat-headed screw according to the invention, the end point of the cutting ribs is situated at at least 10% of the length of the bottom section. The end point of the cutting ribs is preferably situated at 20%, 25%, 30%, 35%, 40% or 45% of the length of the bottom section. The end point of the cutting ribs is in particular situated at at most 60% of the length of the bottom section. The end point of the cutting ribs is preferably situated at at most 50% of the length of the bottom section.

The top section preferably comprises four segments over its circumference, each of which extend over 90° (360 /4) of the circumference. In particular, the screw head comprises four cutting ribs which are arranged at an equal distance apart. More particularly, the screw head comprises 6 or 8 cutting ribs which are arranged at an equal distance apart. In such case, the top section therefore also has 6 or 8 segments over its circumference.

In a more specific embodiment of the flat-headed screw according to the invention, each segment comprises a third part-segment which adjoins the second part-segment in order to collect material which has been loosened by the cutting rib, wherein the projection of the third part-segment on the end face is rectilinear and of which the starting and end point are situated at the same distance from the contour line. Preferably, the second part-segment is an oblique face which is arranged in the screwing-in direction and forms the transition between the third and first part-segment.

According to an advantageous embodiment of the flat-headed screw according to the invention, the top section converges in the direction of the tip at an angle of between 38° and 48°, preferably at an angle of 45°, more particularly of 43°, with respect to the longitudinal axis and the bottom section converges in the direction of the tip at an angle of between 25° and 40°, preferably of between 25° and 35° and more particularly at an angle of 30°, with respect to the longitudinal axis.

In order to explain the characteristics of the present invention further and to indicate additional advantages and particulars thereof, there now follows a more detailed description of a screw according to the present invention. It will be clear that nothing in the following description may be interpreted as a restriction to the scope of protection for the present invention as defined in the claims.

In this description, reference numerals are used to refer to the attached drawings, in which:
- ***Fig. 1******:** shows a perspective view of a flat-headed screw according to the invention;*

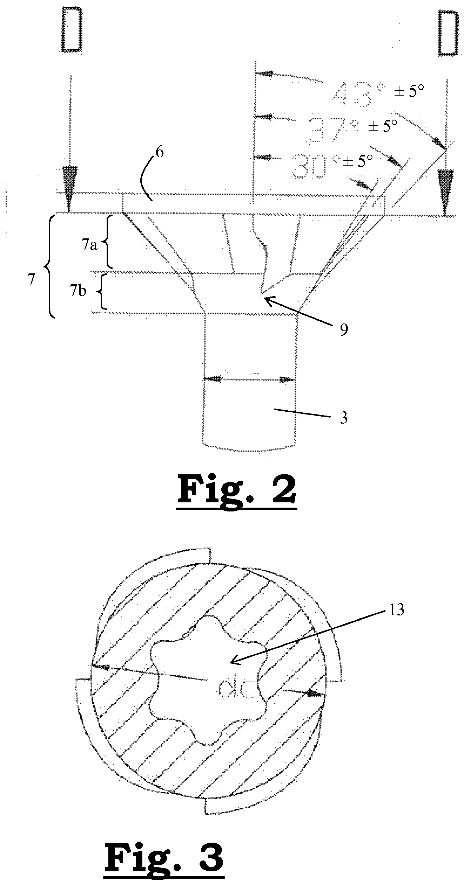

- ***Fig. 2******:** shows a detail view of the area A which is circled in* *Fig. 1**;*
- ***Fig. 3******:** shows a view of section D* - *D indicated in* *Fig. 2**;*
- ***Fig. 4******:** shows a perspective view of the screw head;*
- ***Fig. 5******:** shows a top view of the screw head of the flat-headed screw according to the invention.*

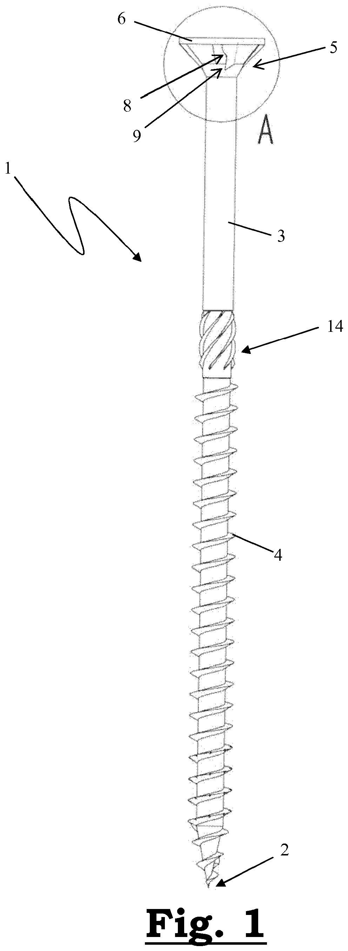

The flat-headed screw (1) according to the present invention and as illustrated in Fig. 1 has a cylindrical shaft (3) provided with a screw thread (4) which extends in a substantially helical manner. The shaft (3) is made of metal, preferably hard steel, and, at one end, is provided with a screw head (5) which comprises a circular end face (6) which is arranged at right angles to the longitudinal axis of the screw (1) which is provided with a central recess (13) in which screw means can be placed in order to screw the screw (1) into or out of an object. The other end of the shaft (3) is provided with a conical end part having an end which tapers into a tip (2) (the top of the screw). The tip (2) is suitable for penetrating wood and/or metal.

The screw head (5) according to the present invention is a double countersunk head and to this end furthermore comprises a conical part (7) which is directed towards the tip (2), with a top conical section (7a) which adjoins the end face (6) and a bottom conical section (7b) which adjoins the shaft (3). The conical part (7) is also provided with a number of curved cutting ribs (8) which are distributed in a peripheral direction and project radially outwards. In the attached figures, in each case four cutting ribs (8) are present. However, it is evident that a screw having more or fewer cutting ribs is also covered by the scope of protection of the present invention.

According to the present invention, said cutting ribs (8) extend from the end face (6) in the direction of the tip (2) and the end point (9) of the cutting rib (8) is in this case situated in the bottom section (7b).

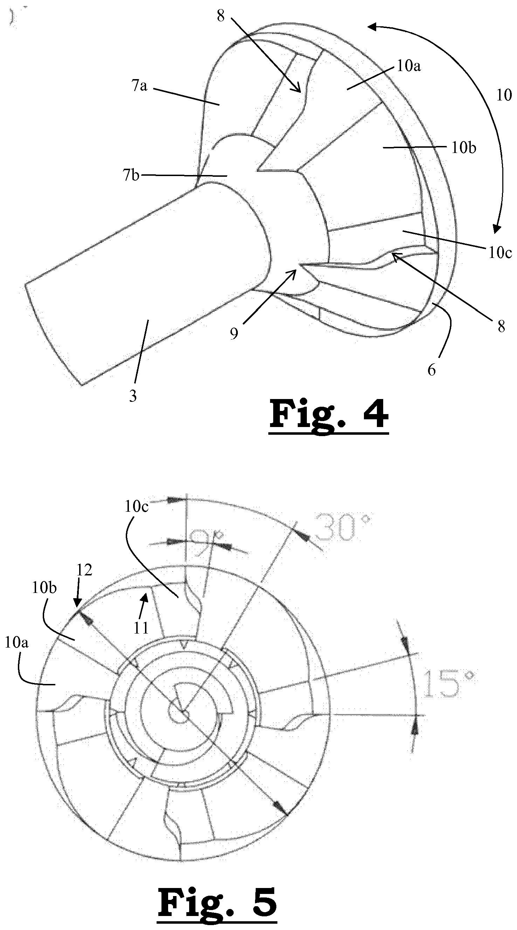

As can be seen in Fig. 4, the top section (7a) comprises a number of successive identical segments (10) along its periphery which are separated from each other by a cutting rib (8). In the illustrated embodiment, there are four cutting ribs (8) and four identical segments (10).

Each segment is of similar construction and in each case comprises:
- a first part-segment (10a) provided with a cutting rib (8); and
- a second part-segment (10b); and
- a third part-segment (10c) which serves as a container (decompression) for the scraped off wood.

The first part-segment (10a) may be regarded as a flat part which is delimited on one side by a cutting rib (8) in the form of a cut-off at 90° (with respect to the horizontal portion). The projected flat surface of the first part-segment is at most 35% of the total surface area. The cutting rib (8) is sickle-shaped in such a way that it will cut off wood quickly and efficiently, so that the screw can be driven into the wood quickly.

The flat first part-segment (10a) will ensure that the screw can be used on metal-on-wood connections, wherein the metal is already provided with a screw opening. The flat part-segment (10a) is sufficiently large (wide) to transmit the forces of the screw onto the metal and produces a 100% contact of metal on metal.

The second part-segment (10b) is oblique and forms the transition between the first and third part-segment. Just like the first part-segment (10a), the third part-segment (10c) is flat, but is situated deeper (closer to the axis of the screw) than the first part-segment (10a).

The above-described structure of the various part-segments can be seen in Fig. 5, inter alia. In this case, the projection of the first part-segment (10a) on the end face (6) coincides with a part of the contour line of the end face (6) and the projection of the second part-segment (10b) on the end face (6) has an elliptical shape, the starting point (11) of which is situated at a distance from the contour line and the end point (12) is situated on the contour line. The projection on the end face (6) of the third part-segment (10c) is rectilinear, with the starting and end point being situated at the same distance from the contour line.

The screw (1) as illustrated is furthermore provided with ribs (14) on its shaft (3). These ribs are provided above the (main) screw thread (4). Such ribs (14) are used in relatively long screws provided with a partial thread in order to reduce the friction on this last shaft portion and thus to prevent premature breaking of the portion without screw thread.

Constructing the conical part from various part-segments together with the positioning and shape of the cutting ribs will ensure that the screw will be countersunk into wood quickly and completely and, in addition, has no detrimental effect in metal-on-wood applications.

When using the screw (1) according to the invention on wood, the performance is perfect due to the action of the cutting rib (8) which forms part of the first part-segment (10a), while the second part-segment (10b) ensures that the screw (1) can be readily screwed out of the material again. The third part-segment (10c) increases the efficiency of the performance of the cutting rib (8) as it makes it easier to discharge the scraped-off material.

## Claims

1. Flat-headed screw (1) having a tip (2), a cylindrical shaft (3) with a longitudinal axis around which at least one screw thread (4) extends in a helical manner and a screw head (5) which comprises an end face (6) which is arranged at right angles to the longitudinal axis and a conical part (7) which is directed towards the tip (2), wherein the conical part (7) is provided with a number of curved cutting ribs (8), which are distributed in a peripheral direction and project radially outwards, and the conical part (7) comprises a top conical section (7a) which adjoins the end face (6) and a bottom conical section (7b) which adjoins the shaft (3), wherein said cutting ribs (8) extend from the end face (6) in the direction of the tip (2) and wherein the end point (9) of the cutting rib (8) is situated in the bottom section (7b), **characterized in that** the top section (7a) comprises a number of successive identical segments (10) along its periphery which are separated from each other by the cutting ribs (8), wherein each segment (10) comprises at least a first (10a) and a second (10b) part-segment, wherein the cutting rib (8) forms part of the first part-segment (10a), **in that** the end face (6) is circular, and **in that** the projection of the first part-segment (10a) on the end face (6) coincides with a part of the contour line of the end face (6), and **in that** the projection of the second part-segment (10b) on the end face (6) has an elliptical shape, the starting point (11) of which is situated at a distance from the contour line and the end point (12) is situated on the contour line.

2. Flat-headed screw (1) according to Claim 1, **characterized in that** the end point (9) of the cutting ribs (8) is situated at at least 10% of the length of the bottom conical section (7b).

3. Flat-headed screw (1) according to one of the preceding claims, **characterized in that** each segment (10) comprises a third part-segment (10c) which adjoins the second part-segment (10b) in order to collect material which has been loosened by the cutting rib (8), wherein the projection of the third part-segment (10c) on the end face (6) is rectilinear and of which the starting and end point are situated at the same distance from the contour line of the end face (6).

4. Flat-headed screw (1) according to one of the preceding claims, **characterized in that** the second part-segment (10b) is an oblique face which is arranged in the screwing-in direction and forms the transition between a third (10c) and the first part-segment (10a).

5. Flat-headed screw (1) according to one of the preceding claims, **characterized in that** the screw head (5) comprises four cutting ribs (8) which are arranged at an equal distance apart.

6. Flat-headed screw (1) according to one of the preceding claims, **characterized in that** the end face (6) is provided with a central recess (13) for screw means.

7. Flat-headed screw (1) according to one of the preceding claims, **characterized in that** the top conical section (7a) converges in the direction of the tip (2) at an angle of between 38° and 48° with respect to the longitudinal axis and the bottom conical section (7b) converges in the direction of the tip (2) at an angle of between 25° and 40° with respect to the longitudinal axis.

## Patentansprüche

1. Senkkopfschraube (1), die eine Spitze (2), einen zylindrischen Schaft (3) mit einer Längsachse, um die sich mindestens ein Schraubengewinde (4) spiralförmig erstreckt, und einen Schraubenkopf (5) aufweist, der eine Endfläche (6), die im rechten Winkel zur Längsachse angeordnet ist, und einen konischen Teil (7), der zur Spitze (2) hin ausgerichtet ist, umfasst, wobei der konische Teil (7) mit mehreren gekrümmten Schneidrippen (8) versehen ist, die in Umfangsrichtung verteilt sind und radial nach außen vorstehen, und wobei der konische Teil (7) einen oberen konischen Abschnitt (7a), der an die Endfläche (6) angrenzt, und einen unteren konischen Abschnitt (7b), der an den Schaft (3) angrenzt, umfasst, wobei sich die Schneidrippen (8) von der Endfläche (6) in Richtung der Spitze (2) erstrecken und wobei sich der Endpunkt (9) der Schneidrippe (8) im unteren Abschnitt (7b) befindet, **dadurch gekennzeichnet, dass** der obere Abschnitt (7a) mehrere aufeinanderfolgende identische Segmente (10) entlang seines Umfangs umfasst, die durch die Schneidrippen (8) voneinander getrennt sind, wobei jedes Segment (10) mindestens ein erstes (10a) und ein zweites (10b) Teilsegment umfasst, wobei die Schneidrippe (8) Teil des ersten Teilsegments (10a) ist, dadurch, dass die Endfläche (6) kreisförmig ist, und dadurch, dass der Vorsprung des ersten Teilsegments (10a) an der Endfläche (6) mit einem Teil der Konturlinie der Endfläche (6) zusammenfällt, und dadurch, dass der Vorsprung des zweiten Teilsegments (10b) an der Endfläche (6) eine elliptische Form aufweist, wobei sich dessen Startpunkt (11) in einem Abstand zur Konturlinie befindet und wobei sich der Endpunkt (12) auf der Konturlinie befindet.

2. Senkkopfschraube (1) nach Anspruch 1, **dadurch gekennzeichnet, dass** sich der Endpunkt (9) der Schneidrippen (8) auf mindestens 10 % der Länge des unteren konischen Abschnitts (7b) befindet.

3. Senkkopfschraube (1) nach einem der vorstehenden Ansprüche, **dadurch gekennzeichnet, dass** jedes Segment (10) ein drittes Teilsegment (10c) umfasst, das an das zweite Teilsegment (10b) angrenzt, um Material zu sammeln, das von der Schneidrippe (8) gelöst wurde, wobei der Vorsprung des dritten Teilsegments (10c) an der Endfläche (6) geradlinig ist und sich daran der Start- und Endpunkt im gleichen Abstand von der Konturlinie der Endfläche (6) befinden.

4. Senkkopfschraube (1) nach einem der vorstehenden Ansprüche, **dadurch gekennzeichnet, dass** das zweite Teilsegment (10b) eine schräge Fläche ist, die in der Einschraubrichtung angeordnet ist und den Übergang zwischen einem dritten (10c) und dem ersten Teilsegment (10a) ausbildet.

5. Senkkopfschraube (1) nach einem der vorstehenden Ansprüche, **dadurch gekennzeichnet, dass** der Schraubenkopf (5) vier Schneidrippen (8) umfasst, die in gleichem Abstand voneinander beabstandet sind.

6. Senkkopfschraube (1) nach einem der vorstehenden Ansprüche, **dadurch gekennzeichnet, dass** die Endfläche (6) mit einer mittigen Aussparung (13) für eine Schraubeinrichtung versehen ist.

7. Senkkopfschraube (1) nach einem der vorstehenden Ansprüche, **dadurch gekennzeichnet, dass** sich der obere konische Abschnitt (7a) in Richtung der Spitze (2) in einem Winkel von zwischen 38° und 48° in Bezug zur Längsachse annähert und sich der untere konische Abschnitt (7b) in Richtung der Spitze (2) in einem Winkel von zwischen 25° und 40° in Bezug zur Längsachse annähert.

## Revendications

1. Vis à tête plate (1) présentant une pointe (2), une tige cylindrique (3) avec un axe longitudinal autour duquel au moins un filetage de vis (14) s'étend sous forme hélicoïdale, et une tête de vis (5) qui comprend une face de bout (6) qui est disposée à angle droit par rapport à l'axe longitudinal et une partie conique (7) qui est dirigée vers la pointe (2), la partie conique (7) étant pourvue d'un certain nombre de nervures de découpe courbes (8) qui sont réparties dans une direction périphérique et qui font saillie radialement vers l'extérieur, et la partie conique (7) comprenant une section conique supérieure (7a) qui est adjacente à la face de bout (6) et une section conique inférieure (7b) qui est adjacente à la tige (3), lesdites nervures de découpe (8) s'étendant depuis la face de bout (6) dans la direction de la pointe (2) et le point d'extrémité (9) de la nervure de découpe (8) étant situé dans la section inférieure (7b), **caractérisée en ce que** la section supérieure (7a) comprend un certain nombre de segments identiques successifs (10) le long de sa périphérie, lesquels sont séparés les uns des autres par les nervures de découpe (8), chaque segment (10) comprenant au moins un premier segment partiel (10a) et un deuxième segment partiel (10b), la nervure de découpe (8) faisant partie du premier segment partiel (10a), **en ce que** la face de bout (6) est circulaire et **en ce que** la projection du premier segment partiel (10a) sur la face de bout (6) coïncide avec une partie de la ligne de contour de la face de bout (6), et **en ce que** la projection du deuxième segment partiel (10b) sur la face de bout (6) présente une forme elliptique, dont le point de départ (11) est situé à distance de la ligne de contour et dont le point d'extrémité (12) est situé sur la ligne de contour.

2. Vis à tête plate (1) selon la revendication 1, **caractérisée en ce que** le point d'extrémité (9) des nervures de découpe (8) est situé à au moins 10 % de la longueur de la section conique inférieure (7b) .

3. Vis à tête plate (1) selon l'une quelconque des revendications précédentes, **caractérisée en ce que** chaque segment (10) comprend un troisième segment partiel (10c) qui est adjacent au deuxième segment partiel (10b) afin de recueillir la matière qui a été détachée par la nervure de découpe (8), la projection du troisième segment partiel (10c) sur la face de bout (6) étant rectiligne et son point de départ et son point d'extrémité étant situés à la même distance de la ligne de contour de la face de bout (6).

4. Vis à tête plate (1) selon l'une quelconque des revendications précédentes, **caractérisée en ce que** le deuxième segment partiel (10b) est une face oblique qui est disposée dans la direction de vissage et qui forme la transition entre un troisième segment partiel (10c) et le premier segment partiel (10a).

5. Vis à tête plate (1) selon l'une quelconque des revendications précédentes, **caractérisée en ce que** la tête de vis (5) comprend quatre nervures de découpe (8) qui sont disposées de manière équidistante.

6. Vis à tête plate (1) selon l'une quelconque des revendications précédentes, **caractérisée en ce que** la face de bout (6) est pourvue d'un renfoncement central (13) pour un moyen de vissage.

7. Vis à tête plate (1) selon l'une quelconque des revendications précédentes, **caractérisée en ce que** la section conique supérieure (7a) converge dans la direction de la pointe (2) suivant un angle compris entre 38° et 48° par rapport à l'axe longitudinal et la section conique inférieure (7b) converge dans la direction de la pointe (2) suivant un angle compris entre 25° et 40° par rapport à l'axe longitudinal.
